# EUROPÄISCHE PATENTSCHRIFT

(11) **EP 0 799 744 B1**
(45) Veröffentlichungstag und Bekanntmachung des Hinweises auf die Patenterteilung: **10.02.1999**
(21) Anmeldenummer: 97104563.8
(22) Anmeldetag: 18.03.1997
(51) Int. Cl.: B60R 1/06

(54) **Verstellbare Rückspiegelanordnung für Kraftfahrzeuge**
Adjustable rear-view mirror for vehicles
Rétroviseur réglable pour véhicules

(30) Priorität: 06.04.1996 DE 29606417 U
(43) Veröffentlichungstag der Anmeldung: 08.10.1997
(73) Patentinhaber: MEKRA Lang GmbH & Co. KG, 90765 Fürth (DE)
(72) Erfinder: Lang, Heinrich, 91465 Ergersheim (DE)
(74) Vertreter: Hübner, Gerd, Dipl.-Phys.

(56) Entgegenhaltungen:
- EP-A- 0 609 508
- DE-B- 2 907 433

## Beschreibung

Die Erfindung betrifft eine verstellbare Rückspiegelanordnung für Kraftfahrzeuge.

Bei eine bekannten Rückspiegelanordnung, die in der EP 0 609 508 A1 beschrieben ist, ist die Schiebeverbindung zwischen einer Halteplatte zur verstellbaren Lagerung eines Rückspiegels im Spiegelgehäuse und einer die Spiegelscheibe haltenden Spiegeltragplatte durch eine Klemmschlußverbindung gebildet. Latztere ist dadurch realisiert, daß die Halteplatte im Bereich zweier gegenüberliegender paralleler Seitenkanten mit Verbindungsvorsprüngen versehen ist, die unter Klemmschluß in komplementär geformte Hinterschneidungsbereiche an der Spiegeltragplatte im wesentlichen parallel zur Plattenebene einschiebbar sind.

Die vorbekannte Schiebeverbindung zeichnet sich zwar durch eine stabile Lagerung und gute Führung der Spiegeltragplatte an der Halteplatte aus, jedoch ist die Konstruktion formtechnisch relativ aufwendig, da sowohl Verbindungsvorsprünge an der Halteplatte, als auch komplementär geformte Hinterschneidungsbereiche an der Spiegeltragplatte vorgesehen sind. Darüber hinaus ist die Montage der Spiegeltragplatte an der Halteplatte zwar an sich relativ einfach, jedoch müssen in der Praxis die Verbindungsvorsprünge an der Halteplatte in die komplementär geformten Hinterschneidungsbereiche an der Spiegeltragplatte gewissermaßen "eingefädelt" werden.

Ferner ist aus der DE 29 07 433 B eine Rückspiegelanordnung bekannt, bei der eine kardanische Gelenkverbindung einen Befestigungsring aufweist, mit dem die Glasträgerplatte der Spiegelscheibe über einen gesonderten Klemmring nach Art eines Bajonettverschlusses verbindbar ist.

Ausgehend von der geschilderten Problematik liegt der Erfindung die Aufgabe zugrunde, die Schiebeverbindung zwischen der Halteplatte und Spiegeltragplatte so zu verbessern, daß sich der Fertigungs- und Montageaufwand für die Rückspiegelanordnung verringert.

Diese Aufgabe wird durch die im Anspruch 1 angegebenen Merkmale gelöst. Demnach ist einerseits mindestens ein nutförmiger, in Richtung der Plattenebene offener Aufnahmekanal an der Halteplatte vorgesehen in den ein komplementärer Verankerungssteg an der Spiegeltragplatte unter Formschluß parallel zur Plattenebene einschiebbar ist. Andererseits ist eine Schiebeverbindung mit einem im wesentlichen keilartigen Umfassungsbereich an der Spiegeltragplatte vorgesehen der mit parallel zur Plattenebene, von keilartig angeordneten Lagerstegen nach innen abstehenden Griffvorsprüngen die einander abgewandten zum Umfassungsbereich komplementären Seitenkanten der Halteplatte nach einer Einschubbewegung in der Plattenebene umgreift.

Zur Erzielung einer stabilen Verbindung zwischen Halteplatte und Spiegeltragplatte sind bevorzugtermaßen beide vorstehend umrissenen Schiebeverbindungsarten an der Rückspiegelanordnung realisiert, wobei jedoch die Anwendung nur einer der beiden Schiebeverbindungsarten möglich ist. Ferner ist darauf hinzuweisen daß die funktionelle Zuordnung der einzelnen Konstruktionsteile der erfindungsgemäßen Schiebeverbindung zu Halte- und Spiegeltragplatte unter Realisierung der Erfindung auch in kinematisch umgekehrter Beziehung vorgenommen werden kann.

Bei beiden erfindungsgemäß vorgesehenen Schiebeverbindgsarten ist von Vorteil, daß trotz eines sehr kurzen Schiebeweges eine stabile und auch für die im üblichen Fahrbetrieb von z.B. Nutzfahrzeugen auftretenden Belastungen taugliche Befestigung der Spiegeltragplatte und damit der Spiegelscheibe an der Halteplatte erreicht wird. Dies wird durch die keilartige Anordnung der Lagerstege noch unterstützt, die eine lagegenaue Positionierung der Spiegeltragplatte auf der Halteplatte in der Schiebeendstellung hervorrufen.

Bevorzugte Ausführungsformen, weitere Merkmale, Einzelheiten und Vorteile der Erfindung sind den Unteransprüchen und der nachfolgenden Beschreibung entnehmbar, in der Ausführungsbeispiele des Erfindungsgegenstandes anhand der beigefügten Zeichnungen näher erläutert werden. Es zeigen
- Fig. 1: einen Außenspiegel gemäß der Erfindung in Draufsicht,
- Fig. 2: eine Seitenansicht des Spiegels nach Fig. 1,
- Fig. 3: eine Draufsicht auf eine Halte- und Spiegeltragplatte in verbundener Stellung aus Pfeilrichtung III nach Fig. 2,
- Fig. 4: einen Schnitt durch die Plattenanordnung entlang der Schnittlinie IV-IV nach Fig. 3,
- Fig. 5: eine Draufsicht auf eine Halte- und Spiegeltragplatte in verbundener Stellung in einer zweiten Ausführungsform,
- Fig. 6: eine Darstellung analog Fig. 5 in einer dritten Ausführungsform der Schiebeverbindung,
- Fig. 7: einen Schnitt gemäß Schnittlinie VII-VII nach Fig. 6,
- Fig. 8: eine Darstellung analog Fig. 5 in einer vierten Ausführungsform der Schiebeverbindung,
- Fig. 9: einen Schnitt entlang der Schnittlinie IX-IX nach Fig. 8,
- Fig. 10: eine Darstellung analog Fig. 5 in einer fünften Ausführungsform der Schiebeverbindung, und
- Fig. 11: einen Schnitt entlang der Schnittlinie XI-XI nach Fig. 10.

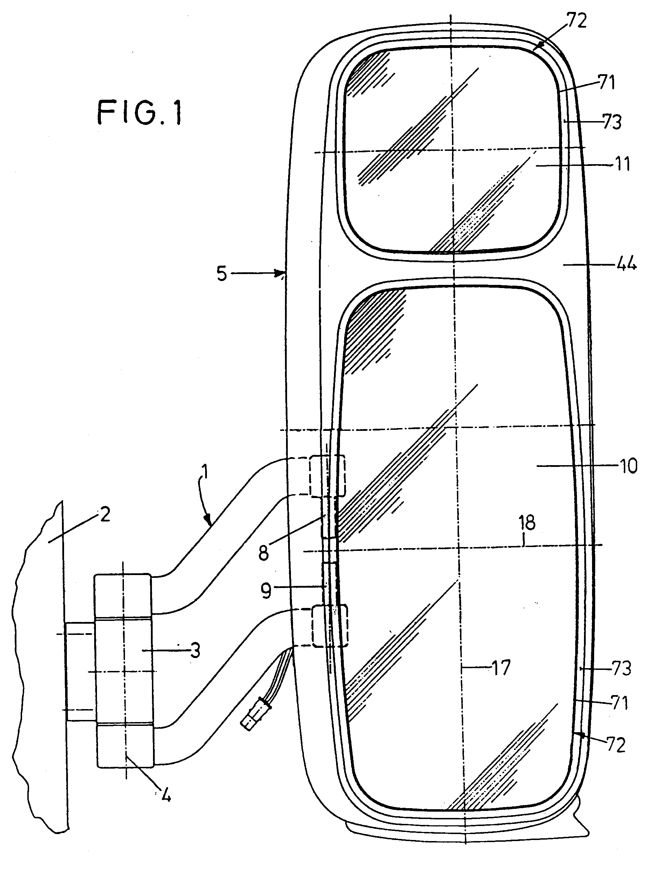

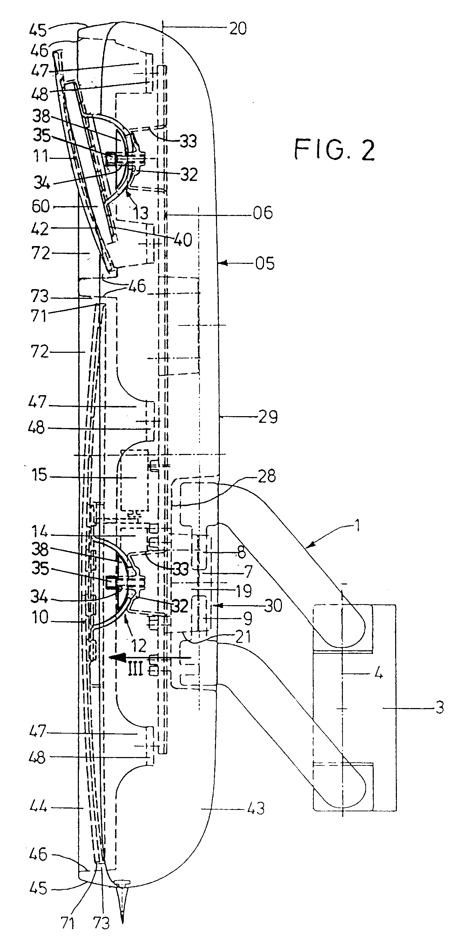

Der in den Fig. 1 und 2 dargestellte Außenspiegel für ein Nutzfahrzeug ist als Doppelspiegel ausgebildet. Er weist einen als doppelarmigen Stützarm 1 ausgebildeten Halter zur Befestigung des Spiegels an einem in Fig. 1 schematisch angedeuteten Karosserieteil 2 eines Nutzfahrzeuges auf. Der doppelarmige Stützarm 1 ist karosserieseitig an einem Lagerbock 3 um eine vertikale Achse 4 schwenkbar befestigt.

In einem aerodynamisch geformten Gehäuse 5 des Spiegels ist eine Trägerplatte 6 angeordnet, die mittels einer Haltevorrichtung 7 an den beiden Haltezapfen 8, 9 an den freien Enden des doppelarmigen Stützarmes 1 befestigt ist. An dieser Trägerplatte 6 ist direkt das Gehäuse 5 gehalten. An geeigneten Stellen kann die Trägerplatte 6 nicht näher dargestellte Aussparungen zur Gewichtsreduzierung aufweisen.

An der Trägerplatte 6 sind ferner zwei Spiegelscheiben 10, 11 mittels jeweils eines als Kugelgelenk ausgebildeten Schwenklagers 12, 13 verschwenkbar gelagert. Die untere Spiegelscheibe 10 stellt die nur leicht gewölbte Hauptspiegelscheibe dar, die obere Spiegelscheibe 11 ist ein kleinerer Weitwinkelspiegel.

Der unteren Spiegelscheibe 10 sind zwei Verstellaggregate 14, 15 in Form elektrischer Getriebemotoren zugeordnet, die mit der Spiegelscheibe 10 jeweils über ein nicht näher dargestelltes Schubkurbelgetriebe 16 gekoppelt sind. Durch die Verstellaggregate 14, 15 kann die Spiegelscheibe 10 um zwei zueinander senkrechte Verstellachsen 17, 18 verstellt werden, um eine Einstellung der Spiegelscheibe 10 durchzuführen.

Die Haltevorrichtung 7 ist als Klemmvorrichtung ausgebildet, deren Klemmungegenlager 19 für die Haltezapfen 8, 9 des Stützarmes 1 einstückig mit der Trägerplatte 6 ausgebildet ist. Das Klemmgegenlager 19 ist dabei am freien Ende eines aus der Plattenebene 20 der Trägerplatte 6 vorstehenden, im wesentlichen quaderförmigen Vorsprung 21 angeordnet. Mittels einer nicht dargestellten Befestigungsschraube ist eine Klemmpratze kraftschlüssig mit dem Klemmgegenlager 19 verbindbar, womit die Trägerplatte 6 unter dem Klemmschluß der Klemmvorrichtung fest mit den Haltezapfen 8, 9 des Stützarmes 1 verbunden ist. Näheres hierzu ist der eingangs genannten EP 0 609 508 A1 entnehmbar.

In der in Fig. 2 gezeigten Montagestellung ragt der Vorsprung 21 durch eine nicht dargestellte Gehäuseöffnung, die im winkelförmig ausgestatteten Boden 28 einer auf der Gehäuseaußenseite 29 angeordneten Gehäusevertiefung 30 angeordnet ist. Klemmgegenlager 19 und Klemmpratze der Haltevorrichtung 7 sind also auf der Gehäuseaußenseite 29 in der Gehäusevertiefung 30 angeordnet und damit besonders leicht für eine gegenseitige Montage von Spiegel und Stützarm 1 zugänglich.

Für die Ausgestaltung der beiden Schwenklager 12, 13 wird auf das der unteren Spiegelscheibe 10 zugeordnete Schwenklager 12 bezug genommen. Das obere Schwenklager 13 ist entsprechend ausgestattet.

Das Schwenklager 12 ist als Kugelgelenk an der Trägerplatte 6 ausgestaltet, wobei die Lagerschale 32 des Kugelgelenks einstückig mit der Trägerplatte 6 ausgebildet ist. Die Lagerschale 32 ist dabei am freien Ende eines aus der Plattenebene 20 der Trägerplatte 6 vorstehenden, ringförmigen Vorsprungs 33 angeordnet. Zentral weist die Lagerschale 32 eine ebenfalls einstückig mit ihr ausgebildete, vertikal abstehende Gewindehülse 34 auf, in der eine Befestigungsschraube 35 für eine auf der Gewindehülse 34 sitzende, nicht näher dargestellte Widerlagerkappe eingeschraubt ist. An dieser stützt sich eine Druckfeder ab, die ein kugelsegmentförmiges Andrückelement 38 in Richtung zur Lagerschale 32 des Schwenklagers 12 beaufschlagt.

Zwischen dem Andruckelement 38 und der Lagerschale 32 verläuft eine halbkugelförmige Gegenlagerschale 39, die an eine ebene Halteplatte 40 für die Spiegelscheibe 10 angeformt ist. Die Gegenlagerschale 39 weist eine zentrale Öffnung 41 auf, durch die unter Spiel die Gewindehülse 34 hindurchragt. An der Halteplatte 40 ist eine Spiegeltragplatte 42 lösbar befestigt, mit der die Spiegelglasscheibe 10 durch Verklebung dauerhaft verbunden ist.

Wie aus den Figuren 1 und 2 weiterhin deutlich wird, ist das Gehäuse 5 zweiteilig aus einem Gehäusehauptteil 43 und einem die Spiegelscheiben 10, 11 seitlich umgebenden Rahmenteil 44 gebildet. Das Rahmenteil 44 weist dabei einen außenliegenden Randbereich 45 sowie die Ränder der Spiegelscheibe 10,11 mit Abstand flankierende, innenliegende Wandabschnitte 46 auf. Von diesen erstrecken sich in Richtung zur Trägerplatte 6 einstückig angeformte Verbindungsstreben 47, die zwischen ihren Enden jeweils einen parallel zur Trägerplatte 6 verlaufenden Haltesteg 48 aufweisen. Mit diesen Haltestegen 48 ist das Rahmenteil 44 an einstückig in die Trägerplatte 6 eingeformten Befestigungselementen fixiert.

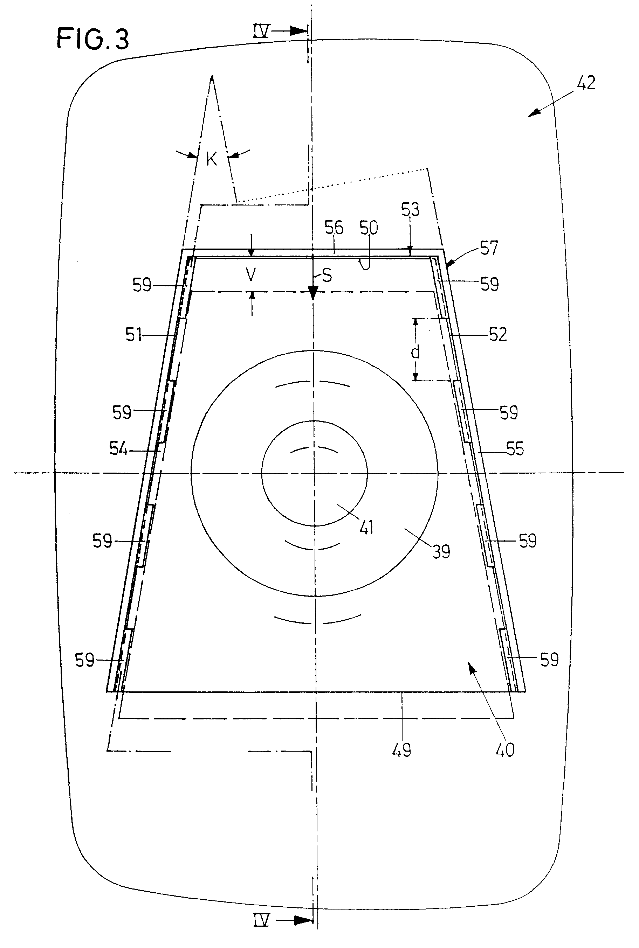

Die bereits oben angesprochene lösbare Befestigung jeder Spiegeltragplatte 42 an der einstückig mit der Gegenlagerschale 39 des Schwenklagers 12 bzw. 13 ausgebildeten Halteplatte 40 ist in ihren verschiedenen Ausführungsformen anhand der Fig. 3 bis 11 näher zu erläutern.

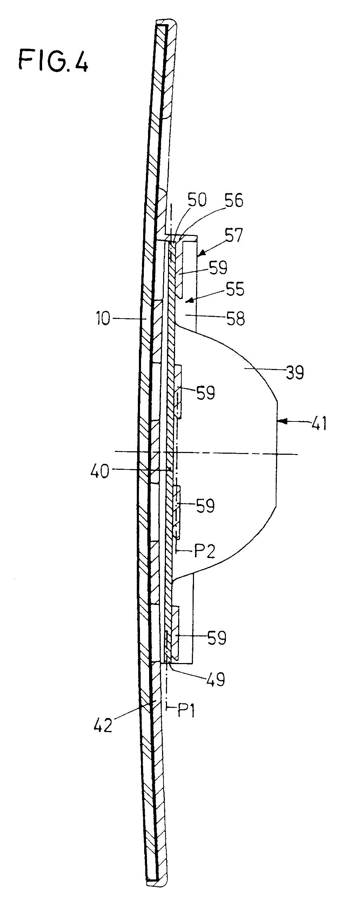

Die Fig. 3 und 4 zeigen einen ersten Grundtyp der als lesbare Schiebeverbindung zwischen Halteplatte 40 und Spiegeltragplatte 42 vorliegenden Befestigung:

Die Halteplatte 40 ist in Draufsicht trapezförmig mit einer unten gelegenen langen Basiskante 49, einer parallel dazu oben verlaufenden kurzen Basiskante 50 und zwei Schenkelkanten 51, 52 ausgebildet. Zentral ist in Fig. 3 und 4 wiederum die Gegenlagerschale 39 mit der Öffnung 41 des Schwenklagers 12 erkennbar. Die Kanten 49 bis 52 der Halteplatte 40 sind komplementär zu einem als ganzes mit 53 angedeuteten, keilartigen Umfassungsbereich an der Spiegeltragplatte 42 ausgebildet. Dieser Umfassungsbereich 53 ist von drei Lagerstegen 54, 55, 56 umgrenzt, die - wie aus Fig. 3 deutlich wird - als durchgehender, in Draufsicht die beiden Schenkel und die kurze Basis eines Trapezes beschreibender Lagerklagen 57 realisiert sind. Die keilartige Ausbildung des Umfassungsbereiches 53 bzw. der Lagerstege 54, 55 ergibt sich durch die schräge Anordnung der beiden Lagerstege 54, 55, die den in Fig. 3 angedeuteten Keilwinkel K bilden. Von den Innenflanken 58 der beiden schenkelseitigen Lagerstege 54, 55 stehen jeweils etwa auf halber Höhe nach innen Griffvorsprünge 59 ab, die mit Abstand d in einer Ebene P2 aneinandergereiht verlaufen. Die Griffvorsprünge 59 liegen dabei in einer Distanz von der eigentlichen Spiegeltragplatte 42, die etwa der Dicke der Halteplatte 40 entspricht.

Zur Montage der Spiegeltragplatte 42 mit der Spiegelscheibe 10 auf der Halteplatte 40 wird die Spiegeltragplatte 42 gegenüber der in den Fig. 3 und 4 gezeigten Montageendstellung nach oben versetzt auf die Halteplatte 40 aufgesetzt und anschließend in Schieberichtung S um den Versatz V relativ zur Halteplatte 40 nach unten verschoben. Nach dieser Einschubbewegung in der Plattenebene P1 liegen die Schenkelkanten 51, 52 und die obere Basiskante 50 der Halteplatte 40 an den entsprechenden Lagerstegen 54, 55, 56 der Spiegeltragplatte 42 an, wobei gleichzeitig die Griffvorsprünge 59 die genannten Schenkelkanten 51, 52 der Halteplatte 40 umgreifen.

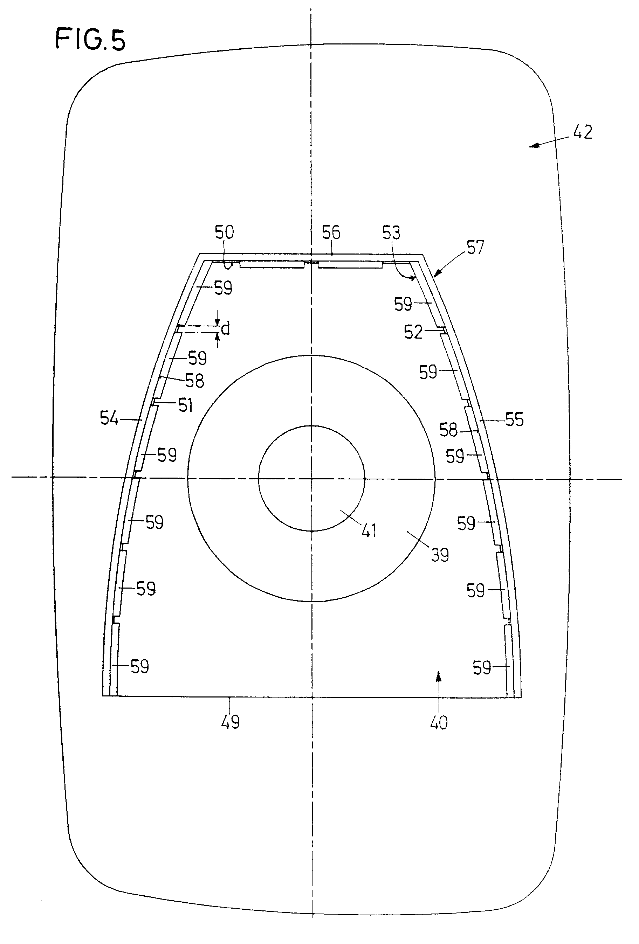

Das in Fig. 5 gezeigte Ausführungsbeispiel unterscheidet sich von dem gemäß den Fig. 3 und 4 lediglich dadurch, daß die Schenkelkanten 51, 52 der Halteplatte 40 nach außen gekrümmt ausgestattet sind. In komplementärer Weise dazu weisen auch die schenkelseitigen Lagerstege 54, 55 einen entsprechenden nach außen gekrümmten Verlauf auf. Die Griffvorsprünge 59 sind nicht nur an den schenkelseitigen Lagerstegen 54, 55, sondern auch an dem basisseitigen Lagersteg 56 vorhanden. Ihr gegenseitiger Abstand d ist gegenüber dem vorherigen Ausführungsbeispiel stark verringert.

Die Montageweise bei der Ausführungsform gemäß Fig. 5 unterscheidet sich praktisch nicht von der bei der Ausführungsform gemäß den Fig. 3 und 4.

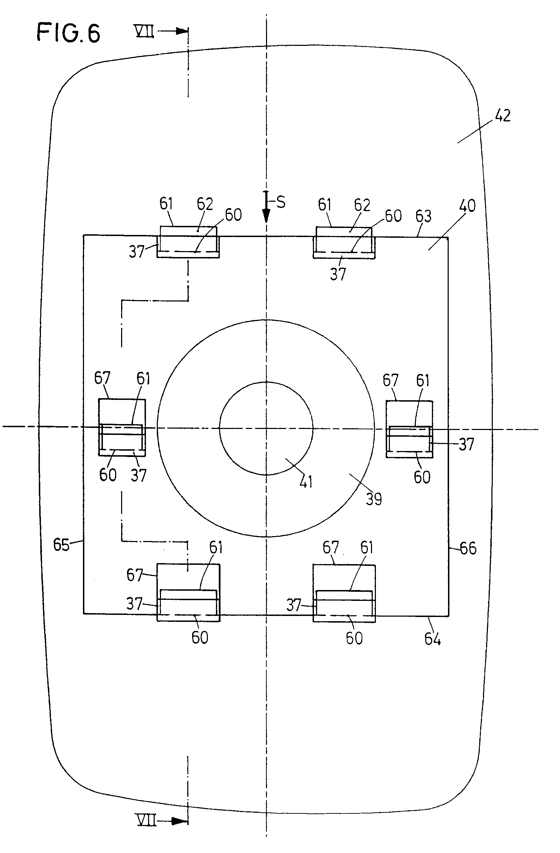

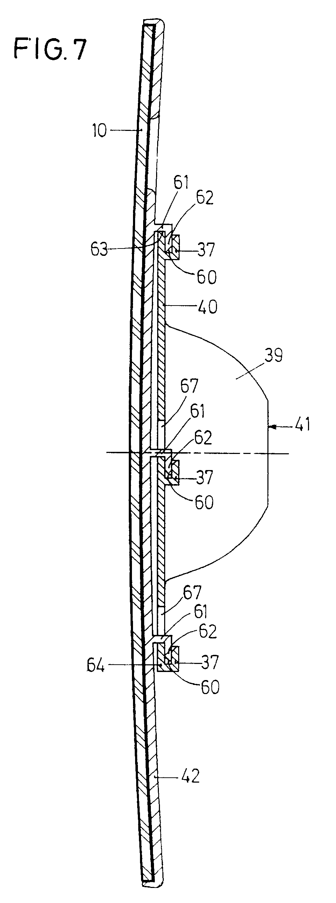

Anhand der Fig. 6 und 7 ist die zweite grundsätzliche Schiebeverbindungskonstruktion beim Erfindungsgegenstand zu erläutern. Grundsätzlich wird hierbei von einem nutförmigen Aufnahmekanal 60 an der Halteplatte 40 ausgegangen, der jeweils durch einen entsprechenden, einstückig an die Halteplatte 40 angespritzten Winkelfortsatz 37 gebildet ist. Jeder Aufnahmekanal 60 ist in Richtung der Plattenebene P1 nach oben offen und dient zur Aufnahme eines komplementären Verankerungssteges 62, der in der Offenseite des Aufnahmekanals 60 entgegengesetzter Orientierung nach unten weist und wiederum jeweils durch einen Winkelfortsatz 61 an der Spiegeltragplatte gebildet ist.

Wie aus Fig. 6 und 7 deutlich wird, sind bei der dort gezeigten Ausführungsform sechs nutförmige Aufnahmekanäle 60 um die Gegenlagerschale 39 herum entlang der im Quadrat angeordneten Seiterkanten 63, 64, 65, 66 der Halteplatte 40 auf der der Spiegeltragplatte 42 abgewandten Rückseite der Halteplatte 40 angeordnet. Zwei dieser Aufnahmekanäle liegen im Bereich der oberen Seitenkante 63, zwei im Bereich der unteren Seitenkante 64 und zwei auf halber Höhe zwischen der Gegenlagerschale 39 und den vertikalen Kanten 65, 66. Damit die vier letztgenannten Aufnahmekanäle 60 für den jeweiligen komplementären Winkelfortsatz 61 der Spiegeltragplatte 42 zugänglich sind, ist vor der Offenseite dieser Aufnahmekanäle 60 jeweils ein Durchbruch 67 in der Halteplatte 40 eingebracht, den der entsprechende Winkelfortsatz 61 durchgreift.

Zur Montage der Spiegeltragplatte 42 an der Halteplatte 40 werden die Winkelfortsätze 61 der Spiegeltragplatte 42 mit ihren Verankerungsstegen 62 vor die Aufnahmekanäle 60 gebracht und die Spiegeltragplatte in Schieberichtung S verschoben. Damit greifen die Verankerungsstege 62 in die entsprechenden Aufnahmekanäle 60 unter Formschluß ein und werden dort - vorzugsweise unter Verrastung - lösbar festgelegt.

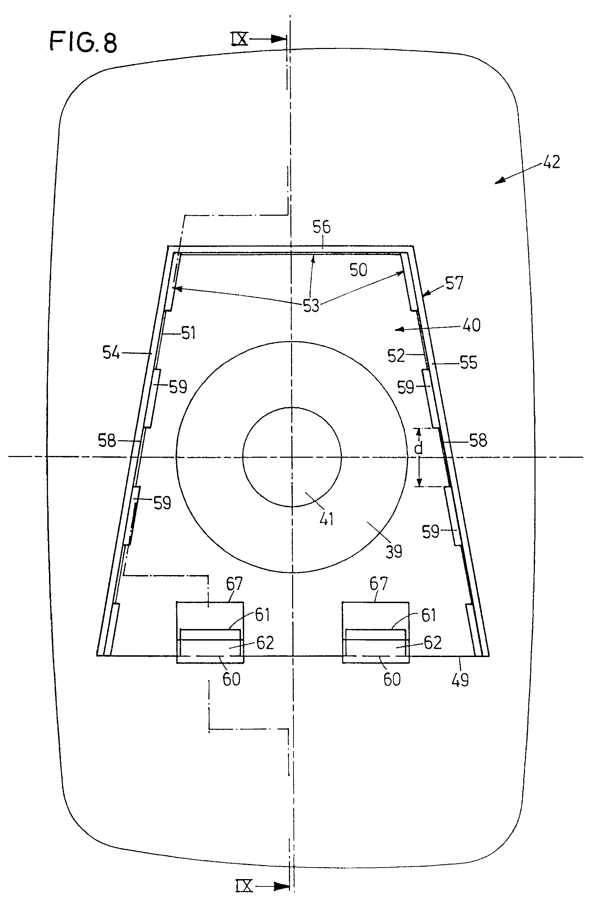

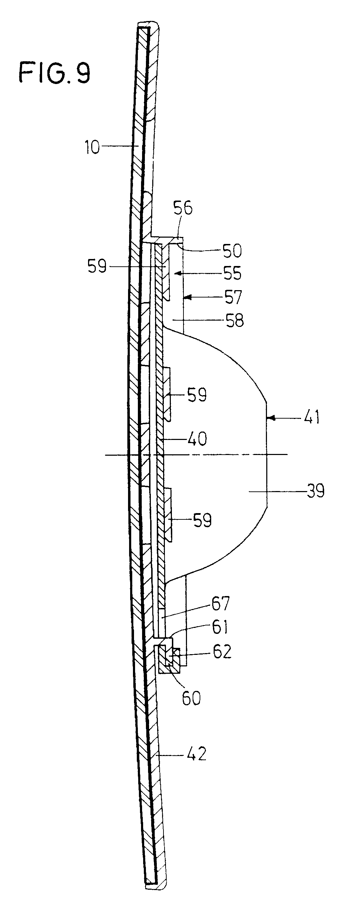

Die in den Fig. 8 und 9 gezeigte Ausführungsform der Verbindungsweise zwischen Halteplatte 40 und Spiegeltragplatte 42 stellt praktisch eine Mischung der in den Fig. 3 und 4 bzw. 6 und 7 gezeigten Konstruktionen dar. Es ist wiederum eine trapezförmige Halteplatte 40 vorgesehen, die mit einem entsprechenden, keilartigen Umfassungsbereich 53, wie er vom trapezförmigen Lagerkragen 57 an der Spiegeltragplatte 42 gebildet ist, zusammenarbeitet. Ferner sind am unteren Ende der Halteplatte 40 zwei Aufnahmekanäle 60 analog den beiden unteren Aufnahmekanälen 60 an der quadratischen Halteplatte 40 gemäß Fig. 6 vorgesehen, in die wiederum entsprechende Verankerungsstege 62 der Spiegeltragplatte 42 eingreifen.

Im übrigen wurden für übereinstimmende Konstruktionsteile identische Bezugszeichen verwendet, so daß sich eine weitere detaillierte Beschreibung der in den Fig. 8 und 9 gezeigten Ausführungsform erübrigt. Diese erschließt sich ohne weiteres aus der Beschreibung der Fig. 3, 4 bzw. 6 und 7.

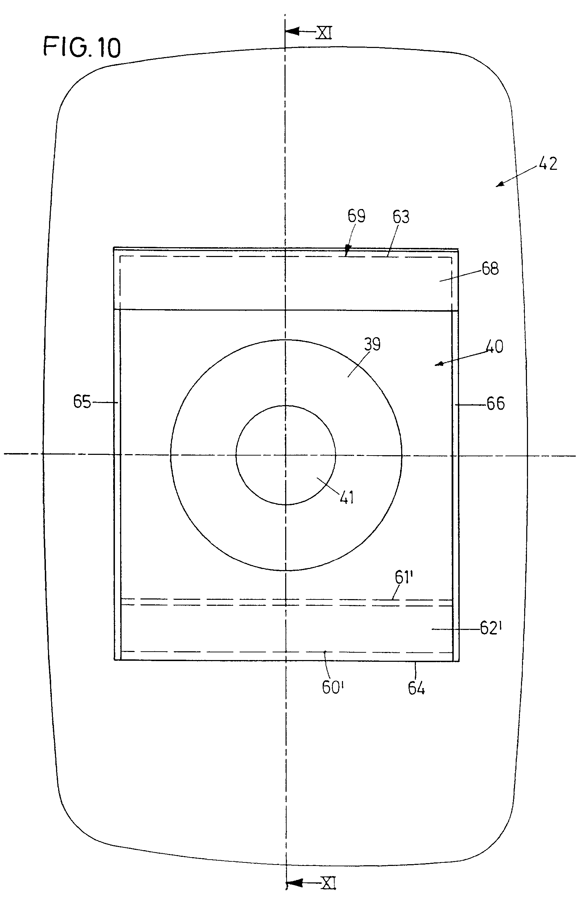

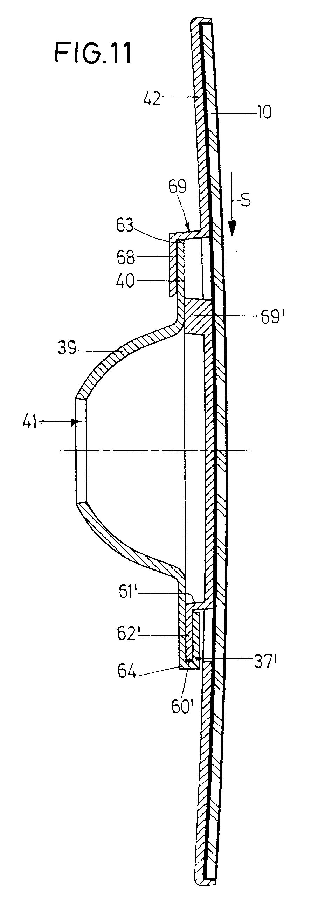

In Fig. 10 und 11 ist schließlich eine weitere Alternative für die grundsätzlich in den Fig. 6 und 7 dargestellte Befestigungsgrundkonstruktion dargestellt. Hierbei ist eine rechteckige Halteplatte 40 vorgesehen, an deren unterem Ende ein über die gesamte Breite verlaufender Aufnahmekanal 60 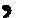 angeformt ist. Letzterer wird wiederum durch einen einstückig angespritzten Winkelfortsatz 37 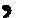 gebildet und liegt - im Gegensatz zu der vorgenannten Ausführungsform - jedoch auf der der Spiegeltragplatte 42 zugewandten Seite der Halteplatte 40. An der Spiegeltragplatte 42 ist wiederum ein Winkelfortsatz 61 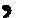 angeformt, der einen dem Aufnahmekanal 60 komplementären Verankerungssteg 62 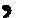 aufweist.

Auf die dem Aufnahmekanal 60 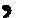 gegenüberliegende obere Seitenkante 63 der Halteplatte 40 ist ein komplementärer, leistenförmiger, die Halteplatte 40 hintergreifender Gegenhaltesteg 68 aufschiebbar, der von einem entsprechenden oberen Winkelfortsatz 69 gebildet wird. Die Spiegeltragplatte 42 ist ferner mit einer Abstützrippe 69 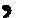 versehen, auf der sich der obere Seitenkantenbereich 63 in der in Fig. 11 gezeigten Montagestellung abstützt.

Zur Montage der Spiegeltragplatte 42 wird diese wiederum um die in Schieberichtung S zu bemessende Breite des Verankerungssteges 62 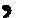 bzw. Gegenhaltestegs 68 nach oben versetzt auf die Halteplatte 40 gesetzt und in Schieberichtung S nach unten geschoben. Dadurch greift der Verankerungssteg 62 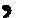 in den entsprechenden Aufnahmekanal 60 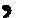 unter Formschluß ein. Gleichzeitig hintergreift der Gegenhaltesteg 68 den oberen Seitenkantenbereich 63 der Halteplatte 40, wodurch eine stabile Verbindung zwischen den beiden Platten 40, 42 geschaffen ist.

Der relative Verschiebeweg zwischen Halteplatte 40 und Spiegeltragplatte 42 ist im übrigen größer als der zwischen dem Außenrand 71 der Spiegeltragplatte 42 und dem die Gehäuseöffnung 72 umgrenzenden Wandabschnitt 46 verbleibende Abstandsspalt 73 (Fig. 1, 2). Damit ist in einer normalen Rückblickstellung des Spiegels, wie sie in Fig. 2 beim unteren Hauptspiegel (Spiegelscheibe 10) gezeigt ist, die Spiegeltragplatte 42 so vom Gehäuse 5 umfaßt, daß eine vollständige Lösung des Schiebeeingriffes zwischen Spiegeltragplatte 42 und Halteplatte 40 unmöglich ist. Bevor der Schiebeeingriff von Halte- und Spiegeltragplatte 40, 42 gelöst wird, stößt die Spiegeltragplatte 42 nämlich an den entsprechenden Wandabschnitt 46 des Gehäuses an.

Erst wenn die Baugruppe aus Spiegeltragplatte 42 und Halteplatte 40 mit Hilfe des Schwenklagers 12, 13 in eine stark verkippte Montagestellung verschwenkt worden ist, wie dies anhand des Zusatzspiegels (Spiegelscheibe 11) in Fig. 2 angedeutet ist, kann die Spiegeltragplatte 42 vollständig aus der Montage-Endstellung in die in Fig. 3 strichliert angedeutete Montage-Ausgangsstellung verschoben und von der Halteplatte 40 abgehoben werden. Ein Herausnehmen der Spiegeltragplatte 42 und ein Wiedereinsetzen ist also nur in einer solchen stark verkippten Stellung möglich.

## Patentansprüche

1. Verstellbare Rückspiegelanordnung für Kraftfahrzeuge mit
- einem Gehäuse (5),
- einer im Gehäuse (5) angeordneten Lageranordnung (12, 39) mit damit verbundener Halteplatte (40) zur verstellbaren Lagerung einer Spiegelscheibe (10, 11) und
- einer mit der Halteplatte (40) verbindbaren Spiegeltragplatte (42) zur Halterung der in einer Gehäuseöffnung (72) angeordneten Spiegelscheibe (10, 11) an der Halteplatte (40), und
- einer Schiebeverbindung zwischen Halteplatte (40) und Spiegeltragplatte (42) mit
-- mindestens einem nutförmigen, parallel zur Plattenebene (P1) der Spiegeltragplatte (42) offenen Aufnahmekanal (60, 60') an der Halteplatte (40), in den ein komplementärer Verankerungssteg (62, 62') an der Spiegeltragplatte (42) unter Formschluß parallel zur Plattenebene (P1) einschiebbar ist, und/oder
-- einem im wesentlichen keilartigen Umfassungsbereich (53) an der Spiegeltragplatte (42), der mit parallel zur Plattenebene (P1) von keilartig angeordneten Lagerstegen (54, 55, 56) nach innen abstehenden Griffvorsprüngen (59) die einander abgewandten, zum Umfassungsbereich komplementären Seitenkanten (50, 51, 52) der Halteplatte (40) nach einer Einschubbewegung in der Plattenebene (P1) umgreift.

2. Rückspiegelanordnung nach Anspruch 1, dadurch gekennzeichnet, daß der mindestens eine nutförmige Aufnahmekanal (60) auf der der Spiegeltragplatte (42) abgewandten Rückseite der Halteplatte (40) angeordnet ist, und daß vor der Offenseite des Aufnahmekanals (60) ein Durchbruch (67) in der Halteplatte (40) angeordnet ist, den ein den Verankerungssteg (62) bildender Winkelfortsatz (61) der Spiegeltragplatte (42) durchgreift.

3. Rückspiegelanordnung nach Anspruch 1 oder 2, dadurch gekennzeichnet, daß eine Vielzahl von in dieselbe Richtung offenen Aufnahmekanälen (60) entlang der Seitenkanten (63, 64, 65, 66) der Halteplatte (40) angeordnet ist.

4. Rückspiegelanordnung nach einem der Ansprüche 1 bis 3, dadurch gekennzeichnet, daß ein die gesamte Länge einer Seitenkante (64) der Halteplatte (40) einnehmender Aufnahmekanal (60 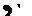 ) vorgesehen ist.

5. Rückspiegelanordnung nach Anspruch 4, dadurch gekennzeichnet, daß auf den dem Aufnahmekanal (60 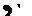 ) gegenüberliegenden Seitenkantenbereich (64) der Halteplatte (40) ein komplementärer, leistenförmiger, die Halteplatte hintergreifender Gegenhaltesteg (68) aufschiebbar ist.

6. Rückspiegelanordnung nach Anspruch 1 oder 2, dadurch gekennzeichnet, daß an der in Öffnungsrichtung des keilartigen Umfassungsbereiches (53) weisenden Seitenkante (49) der Halteplatte (40) mindestens zwei Aufnahmekanäle (60) angeordnet sind.

7. Rückspiegelanordnung nach einem der Ansprüche 1 bis 3 oder 6, dadurch gekennzeichnet, daß die Lagerstege (54, 55, 56) als durchgehender, in Draufsicht die beiden Schenkel und die kurze Basis eines Trapezes beschreibender Lagerkragen (57) ausgebildet sind.

8. Rückspiegelanordnung nach Anspruch 7, dadurch gekennzeichnet, daß die die Schenkel beschreibenden Lagerstege (54, 55) jeweils nach außen gekrümmt verlaufen.

9. Rückspiegelanordnung nach Anspruch 7 oder 8, dadurch gekennzeichnet, daß die Griffvorsprünge (59) jeweils mit Abstand aneinandergereiht an die Innerflanken des Lagerkragens (57) angeformt sind.

10. Rückspiegelanordnung nach einem der Ansprüche 1 bis 9, dadurch gekennzeichnet, daß die Halteplatte (40) einstückig mit der Lageranordnung (12, 39) verbunden ist.

## Claims

1. An adjustable rear-view mirror arrangement for vehicles, comprising
- a housing (5),
- a bearing arrangement (12, 39) which is disposed in the housing (5) and comprises a retaining plate (40) that is joined thereto for the adjustable lodging of a mirror glass (10, 11), and
- a mirror support plate (42) to be connected to the retaining plate (40) for the mounting of a mirror glass (10, 11) disposed in a housing opening (72) on the retaining plate (40), and
- a sliding connection between the retaining plate (40) and the mirror support plate (42) having
-- at least one groove-type locating passage (60, 60') on the retaining plate (40), which is open parallel to the plate plane (P1) of the mirror support plate (42) and into which a complementary anchoring web (62, 62') on the mirror support plate (42) is insertable parallel to the plate plane (P1) by positive fit and/or
-- a substantially wedge-type encircling portion (53) on the mirror support plate (42), which, after a motion of insertion in the plate plane (P1), encloses the lateral edges (50, 51, 52) of the retaining plate (40), which are turned away from each other and complementary to the encircling portion by means of gripping projections (59) projecting inwards from bearing webs (54, 55, 56) of wedge-type arrangement parallel to the plate plane (P1).

2. A rear-view mirror arrangement according to claim 1, characterized in that the at least one groove-type locating passage (60) is disposed on the rear side, facing away from the mirror support plate (42), of the retaining plate (40), and in that before the open side of the locating passage (60), an opening (67) is disposed in the retaining plate (40), through which reaches an angled prolongation (61), forming the anchoring web (62), of the mirror support plate (42).

3. A rear-view mirror arrangement according to claim 1 or 2, characterized in that a plurality of locating passages (60) open in the same direction are disposed along the lateral edges (63, 64, 65, 66) of the retaining plate (40).

4. A rear-view mirror arrangement according to one of claims 1 to 3, characterized in that a locating passage (60') is provided, taking the entire length of a lateral edge (64) of the retaining plate (40).

5. A rear-view mirror arrangement according to claim 4, characterized in that a complementary, bar-type holding-up web (68), which backs up the retaining plate (40), can be slipped on the latter's lateral edge portion (64) opposite to the locating passage (60').

6. A rear-view mirror arrangement according to claim 1 or 2, characterized in that at least two locating passages (60) are disposed on the lateral edge (49) of the retaining plate (40) that is directed in the opening direction of the wedge-type encircling portion (53).

7. A rear-view mirror arrangement according to one of claims 1 to 3 or 6, characterized in that the bearing webs (54, 55, 56) are formed as a continuous bearing collar (57) in a plan view defining the two sides and the short base of a trapezoid.

8. A rear-view mirror arrangement according to claim 7, characterized in that the bearing webs (54, 55) defining the sides are bent outward.

9. A rear-view mirror arrangement according to claim 7 or 8, characterized in that lined up at a distance, the gripping projections (59) are injection-molded on the inner flanks of the bearing collar (57).

10. A rear-view mirror arrangement according to one of claims 1 to 9, characterized in that the retaining plate (40) is integrally joined to the bearing arrangement (12, 39).

## Revendications

1. Ensemble formant rétroviseur réglable pour véhicules automobiles, comprenant
- un boîtier (5),
- un ensemble de montage (12, 39) disposé dans le boîtier (5) et solidarisé à une plaque de retenue (40) pour monter un miroir (10, 11) de manière réglable, et
- une plaque porte-miroir (42) pouvant être reliée à la plaque de retenue (40) pour maintenir contre celle-ci le miroir (10, 11) disposé dans un orifice de boîtier (72), et
- une liaison coulissante entre la plaque de retenue (40) et la plaque porte-miroir (42) comprenant :
-- sur la plaque de retenue (40), au moins un canal de réception en forme de gorge (60, 60') qui est ouvert parallèlement au plan (P1) de la plaque porte-miroir (42) et dans lequel une patte d'ancrage complémentaire (62, 62') disposée sur la plaque porte-miroir (42) peut être insérée parallèlement au plan (P1) de la plaque en formant une liaison par complémentarité de formes, et/ou
-- sur la plaque porte-miroir (42), une zone d'encadrement sensiblement en forme de coin (53) qui, au moyen de saillies preneuses (59) qui sont parallèles au plan (P1) de la plaque et s'étendent vers l'intérieur à partir de barrettes d'appui (54, 55, 56) disposées en forme de coin, entoure les bords latéraux en vis-à-vis (50, 51, 52), complémentaires à la zone d'encadrement, de la plaque de retenue (40) après insertion dans le plan (P1) de la plaque.

2. Ensemble formant rétroviseur selon la revendication 1, caractérisé en ce que le canal de réception en forme de gorge (60), au nombre d'au moins un, est disposé sur la face arrière de la plaque de retenue (40) située à l'opposé de la plaque porte-miroir (42), et en ce que, devant le côté ouvert du canal de réception (60), est prévue, dans la plaque de retenue (40), une découpe (67) qu'une cornière en applique (61) de la plaque porte-miroir (42) traverse en formant la patte d'ancrage (62).

3. Ensemble formant rétroviseur selon la revendication 1 ou 2, caractérisé en ce qu'une pluralité de canaux de réception (60) ouverts dans la même direction sont disposés le long des bords latéraux (63, 64, 65, 66) de la plaque de retenue (40).

4. Ensemble formant rétroviseur selon l'une des revendications 1 à 3, caractérisé en ce qu'il est prévu un canal de réception (60') occupant toute la longueur d'un bord latéral (64) de la plaque de retenue (40).

5. Ensemble formant rétroviseur selon la revendication 4, caractérisé en ce qu'une contre-barrette de retenue complémentaire en forme de languette (68), qui passe derrière la plaque de retenue peut être emmanchée sur la zone de bord latéral (64) de la plaque de retenue (40) située à l'opposé du canal de réception (60').

6. Ensemble formant rétroviseur selon la revendication 1 ou 2, caractérisé en ce qu'au moins deux canaux de réception (60) sont disposés sur le bord latéral (49) de la plaque de retenue (40) tourné dans la direction d'ouverture de la zone d'encadrement en forme de coin (53).

7. Ensemble formant rétroviseur selon l'une des revendications 1 à 3 ou 6, caractérisé en ce que les barrettes d'appui (54, 55, 56) sont conçues sous la forme de rebords d'appui continus (57) qui, en vue de dessus, reproduisent les deux côtes et la petite base d'un trapèze.

8. Ensemble formant rétroviseur selon la revendication 7, caractérisé en ce que les barrettes d'appui (54, 55) formant les côtés sont chacune incurvées vers l'extérieur.

9. Ensemble formant rétroviseur selon la revendication 7 ou 8, caractérisé en ce que les saillies preneuses (59) sont chacune moulées à distance les unes des autres sur les flancs intérieurs du rebord d'appui (57).

10. Ensemble formant rétroviseur selon l'une des revendications 1 à 9, caractérise en ce que la plaque de retenue (40) fait corps avec l'ensemble de montage (12, 39).
